# FASCICULE DE BREVET EUROPEEN

(11) **EP 1 127 740 B1**
(45) Date de publication et mention de la délivrance du brevet: **02.02.2011**
(21) Numéro de dépôt: 01400053.3
(22) Date de dépôt: 10.01.2001
(51) Int. Cl.: B60Q 1/04, B60Q 1/068

(54) **Projecteur de véhicule automobile à masque et réflecteur**
Kraftfahrzeugscheinwerfer mit Maske und Reflektor
Vehicle headlight with mask and reflector

(30) Priorité: 24.02.2000 FR 0002322
(43) Date de publication de la demande: 29.08.2001
(73) Titulaire: VALEO VISION, 93012 Bobigny Cedex (FR)
(72) Inventeur: Cappeddu, Joseph, 93012 Bobigny Cédex (FR); Voets, Laurent, 93012 Bobigny Cédex (FR)
(74) Mandataire: Hervouet, Sylvie

(56) Documents cités:
- EP-A- 0 054 444
- DE-A- 19 546 271

## Description

L'invention concerne les projecteurs de véhicule automobile.

On connaît un projecteur de véhicule automobile comportant un boîtier, un réflecteur et un masque visible depuis l'extérieur du projecteur entre le réflecteur et le boîtier. Le projecteur comporte une platine portant le réflecteur, le masque et le porte-lampe. L'orientation du faisceau du projecteur par rapport au véhicule peut être réglée par un moyen reliant la platine au boîtier. Il peut s'agir d'un moyen de réglage manuel (local ou depuis le tableau de bord) et occasionnel, ou d'un moyen de correction automatique, par exemple en fonction de l'assiette du véhicule. Toutefois, l'assemblage de ces différentes pièces entre elles est relativement long.

DE 195 46 271 décrit un phase pour véhicule avec un réflecteur monté pivotant autour d'un axe.

Un but de l'invention est de fournir un projecteur plus rapide à assembler.

En vue de la réalisation de ce but, on prévoit selon l'invention un projecteur pour véhicule, comportant au moins un réflecteur, un boîtier et un masque visible entre le réflecteur et le boîtier depuis l'extérieur du projecteur, dans lequel le réflecteur et le masque comportent des moyens de clipsage direct l'un à l'autre selon la revendication 1.

Ainsi, le clipsage permet de fixer le masque au réflecteur de façon rapide, fiable et peu coûteuse. On rend donc la fabrication plus rapide.

L'invention pourra en outre présenter au moins l'une des caractéristiques suivantes :
- les moyens de clipsage étant aptes à former une butée à l'égard du déplacement du réflecteur par rapport au masque suivant une direction donnée dans un premier sens, le réflecteur et le masque comportent des moyens de butée interdisant le déplacement du réflecteur par rapport au masque dans cette direction et dans un deuxième sens ;
- les moyens de clipsage et les moyens de butée sont alternés circonférentiellement autour d'un axe du projecteur ;
- les moyens de clipsage comprennent des ergots portés par le masque ;
- le réflecteur comportant une paroi réfléchissante, les moyens de clipsage sont agencés de sorte que le réflecteur et le masque viennent en prise mutuelle à distance de cette paroi, à l'arrière de celle-ci ;
- le réflecteur comporte une embase s'étendant en partie arrière d'une paroi réfléchissante du réflecteur et au moyen de laquelle le réflecteur est fixé au masque ;
- le masque présente une partie évasée vers l'avant du projecteur et dans laquelle s'étend le réflecteur ;
- le masque et le réflecteur sont configurés pour assurer un centrage mutuel lors de l'approche de la position de clipsage ;
- le projecteur comporte des lamelles élastiques de centrage relatif du réflecteur et du masque.
- le réflecteur étant un premier réflecteur et le masque étant un premier masque, le projecteur comporte un deuxième réflecteur et un deuxième masque associé au deuxième réflecteur, les deux masques étant d'une seule pièce ;
- le projecteur comporte des moyens de clipsage direct du deuxième masque au deuxième réflecteur ;

Le projecteur selon l'invention comporte des moyens de réglage de la position du ou de chaque réflecteur par rapport au boîtier ; les moyens de réglage sont reliés directement au masque en vue du réglage.

D'autres caractéristiques et avantages de l'invention apparaîtront encore dans la description suivante de deux modes préférés de réalisation et de variantes donnés à titre d'exemples non limitatifs. Aux dessins annexés :
- la figure 1 est une vue en section axiale verticale d'un projecteur selon un premier mode préféré de réalisation ;
- la figure 2 est une vue de face de certaines pièces du projecteur de la figure 1 ;
- les figures 3 et 4 sont deux vues en section axiale d'une partie du projecteur de la figure 1 suivant les plans III-III et IV-IV de la figure 2 ;
- les figures 5 à 7 sont trois vues en section axiale du projecteur de la figure 1, montrant trois étapes du clipsage du masque au réflecteur ;
- la figure 8 est une vue en section axiale horizontale d'un projecteur selon un deuxième mode de réalisation ;
- les figures 9, 10 et 11 sont des vues en section verticale selon les plans IX-IX, X-X et XI-XI du projecteur de la figure 8 ;
- la figure 12 est une vue partielle de face du projecteur de la figure 8, au niveau de la partie gauche de celui-ci ;
- les figures 13, 14 et 15 sont des vues partielles respectives en perspective et arrière du masque de la figure 8 seul ; et
- les figures 16, 17 et 18 sont des vues analogues aux figures 13, 14 et 15 du masque recevant le réflecteur, la face réfléchissante du réflecteur ayant été omise pour bien montrer les moyens de fixation.

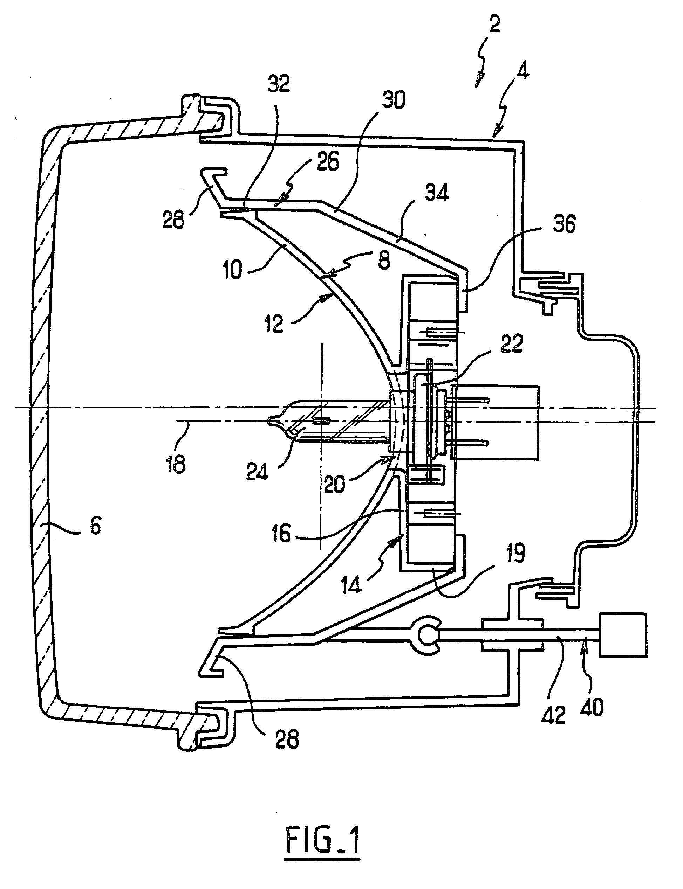

On va décrire en référence aux figures 1 à 7 un premier mode de réalisation du projecteur selon l'invention. Il s'agit en l'espèce d'un projecteur de camion. Dans cet exemple, le projecteur 2 comporte un boîtier 4 et une glace 6 fixée à ce dernier en définissant une enceinte interne au projecteur. Le projecteur comporte un réflecteur 8 comprenant une paroi 10 à face réfléchissante 12 en forme de paraboloide. Le réflecteur comporte une embase arrière 14 comprenant une paroi plane 16 en forme générale de disque coaxial à l'axe 18 de la paroi réfléchissante et une bordure cylindrique 19 d'axe 18 s'étendant vers l'arrière à partir de la paroi plane 16. La paroi réfléchissante 10 et la paroi plane 16 sont accolées en leur zone centrale, celles-ci présentant une ouverture 20 suivant l'axe 18. Le réflecteur 8 est d'une seule pièce. Le projecteur comporte un porte-lampe 22 fixé au réflecteur par des moyens appropriés et supportant une lampe 24 s'étendant dans l'ouverture 20.

Le projecteur comporte un masque 26 s'étendant circonférentiellement entre la paroi réfléchissante 10 et le boîtier 4. Le masque 26 comporte à l'avant une bordure annulaire 28 prolongeant radialement en direction de l'extérieur vers le boîtier la paroi réfléchissante du réflecteur. Cette bordure est localement inclinée vers l'avant et l'axe 18. Elle est visible depuis l'extérieur du projecteur entre le réflecteur et le boîtier. Elle vise à masquer une grande partie du boîtier pour un observateur placé devant la glace. Le masque comporte une jupe 30 s'étendant vers l'arrière à partir de la bordure 28. La jupe comprend un premier tronçon cylindrique 32 d'axe 18 suivi par un deuxième tronçon tronconique 34 d'axe 18 allant en se rétrécissant vers l'arrière.

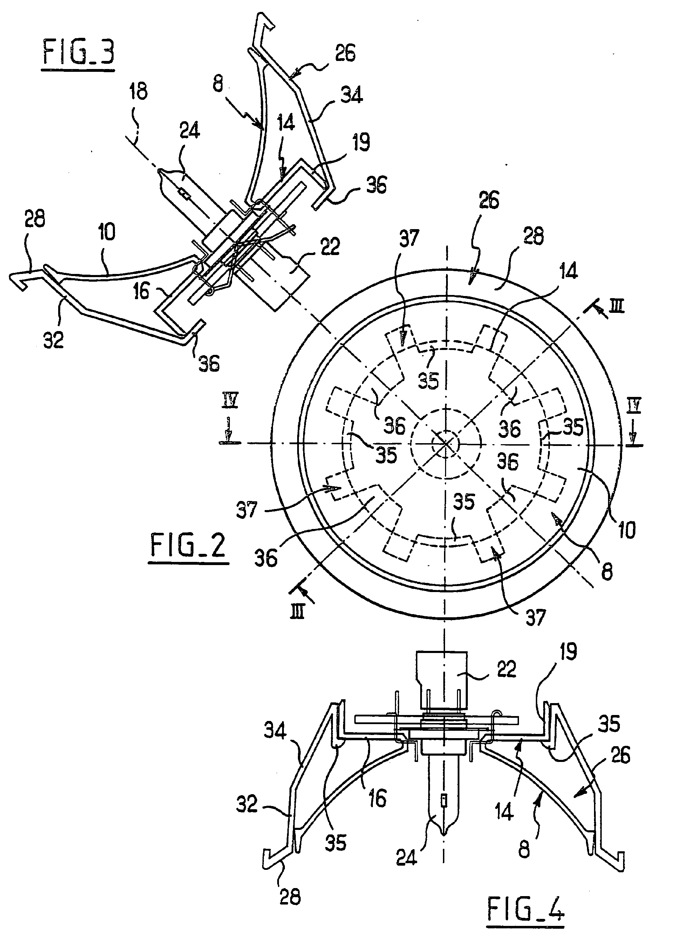

La jupe 30 présente un bord arrière portant une série d'ergots 35 et une série de butées 36. En référence à la figure 4, les ergots 35 comportent des tronçons de cylindre d'axe 18 revenant axialement vers l'avant à partir du bord arrière de la jupe. L'extrémité avant de chaque ergot 35 s'étend en saillie radiale vers l'axe 18. En référence à la figure 3, les butées 36 comportent des tronçons de paroi annulaire plane perpendiculaires à l'axe 18. Les ergots 35 sont ici au nombre de 4, tout comme les butées 36 avec lesquelles ils sont régulièrement alternés autour de l'axe 18. Les ergots sont aptes à venir en appui suivant l'axe 18 sur la paroi 16 pour la solliciter vers l'arrière, alors que les butées 36 sont aptes à venir en appui suivant l'axe 18 sur le bord arrière libre de la bordure cylindrique 19 pour la solliciter vers l'avant.

En référence à la figure 2, le deuxième tronçon tronconique 34 de la jupe présente des échancrures 37 entre ergots 35 et butées 36 pour accroître l'élasticité des ergots.

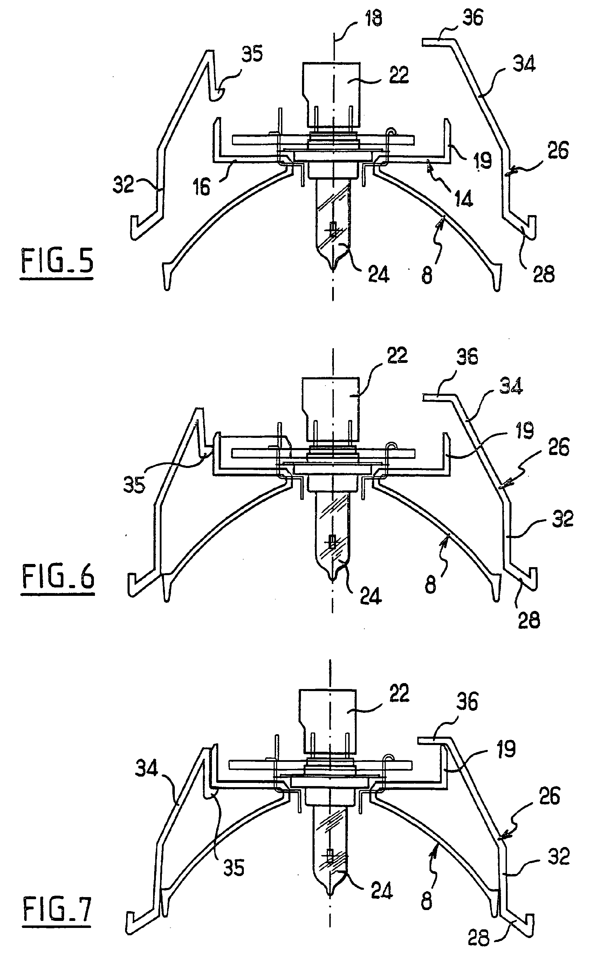

Par référence aux figures 5 à 6, pour fixer le masque 26 au réflecteur 8 par clipsage, on opère de la façon suivante. Pour plus de clarté, ces figures présentent chacune un ergot 35 et une butée 36 alors que ceux-ci ne peuvent pas être dans le même plan axial de section dans le présent exemple. On suppose assemblés entre eux le réflecteur 8, le porte-lampe 22 et la lampe 24.

On amène le masque 26 par l'arrière du réflecteur 8. Lorsque le bord avant de la paroi réfléchissante 10 vient en contact avec la bordure 28 puis en regard du premier tronçon cylindrique 32 de la jupe, ces différents éléments coopèrent grâce à leur forme pour assurer le centrage relatif des deux pièces, facilitant ainsi leur positionnement relatif en vue de la fixation. On fait glisser axialement le masque sur le réflecteur. La bordure arrière 19 du réflecteur vient en contact avec une face avant arrondie des ergots 35, ce qui par effet de rampe sollicite ceux-ci radialement vers l'extérieur pour leur écartement, laissant libre le passage pour cette bordure. Le masque arrive en position de fixation lorsque sa bordure arrière vient en appui axial sur les quatre butées 36. A ce moment, les ergots 35 se rétractent radialement vers l'intérieur pour venir en appui axial sur l'avant de l'embase 14.

La répartition circulaire des ergots 35 autour de l'axe 18 assure à elle seule un bon centrage radial relatif des deux pièces. Ce montage extrêmement simple et rapide à opérer assure un bon maintien et un bon positionnement des deux pièces.

En référence à la figure 1, le projecteur comporte en outre un correcteur de position 40 connu en soi dont on a représenté seulement la tige d'actionnement 42. Celle-ci est mobile à coulissement à travers un palier du boîtier 4, suivant une direction essentiellement parallèle à l'axe 18. Cette tige est reliée par une liaison rotule directement à une partie du masque 26. Cette liaison est par exemple obtenue par cloquage d'une face sphérique de la tige 42 dans un logement adapté du masque. L'ensemble formé par le réflecteur 8, le masque 26, le porte-lampe 22 et la lampe 24 est par ailleurs supporté de façon mobile en un ou deux autres points fixes du boîtier de sorte que le coulissement de la tige 42 modifie l'inclinaison de cet ensemble par rapport au boîtier dans un ou deux plans perpendiculaires entre eux. Le masque remplit donc une fonction de platine de réglage.

Dans ce mode de réalisation, le projecteur comporte une unique lampe principale 24, c'est-à-dire une unique lampe assurant une fonction d'éclairage.

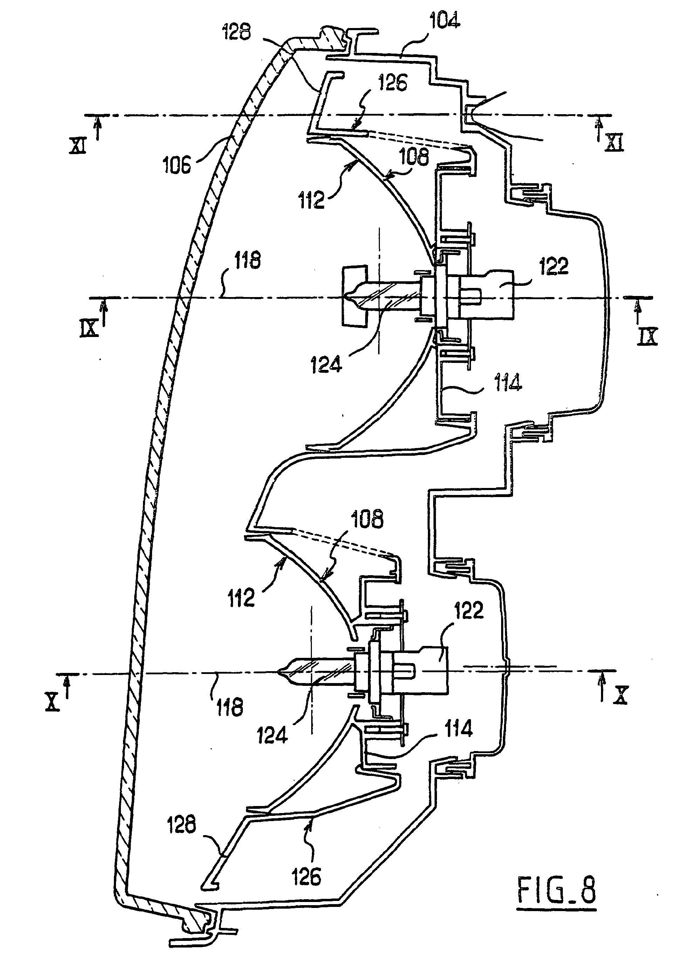

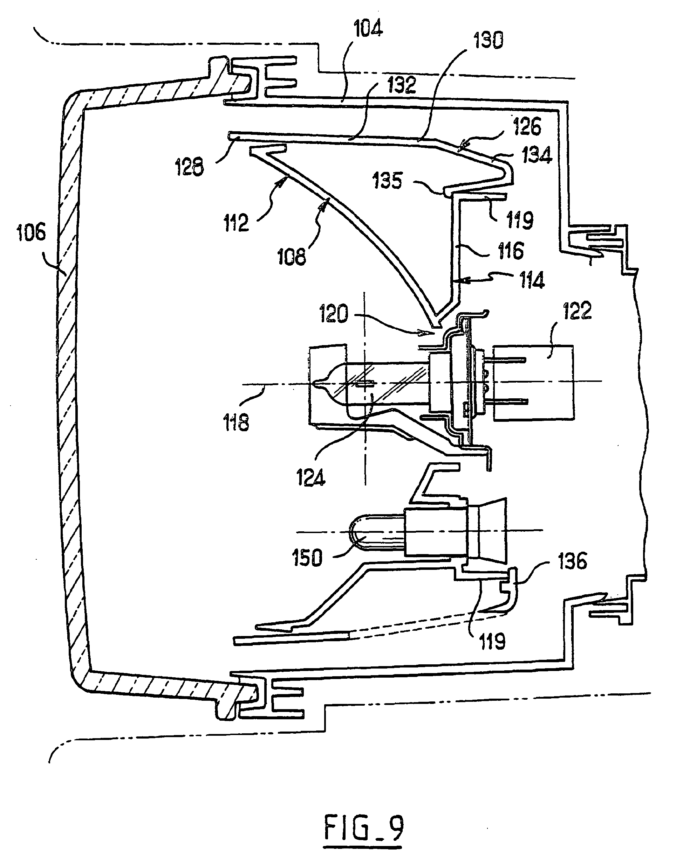

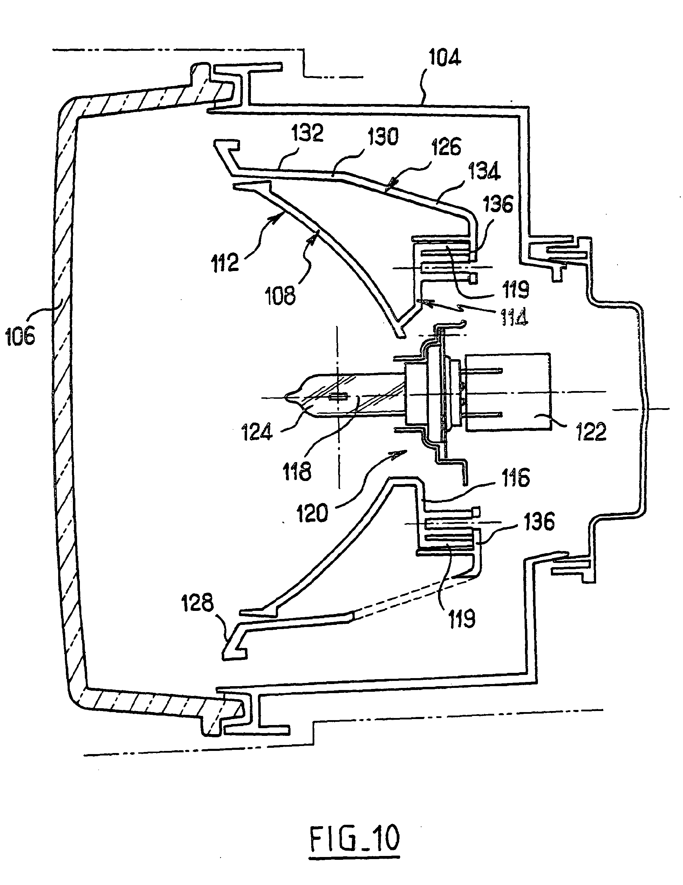

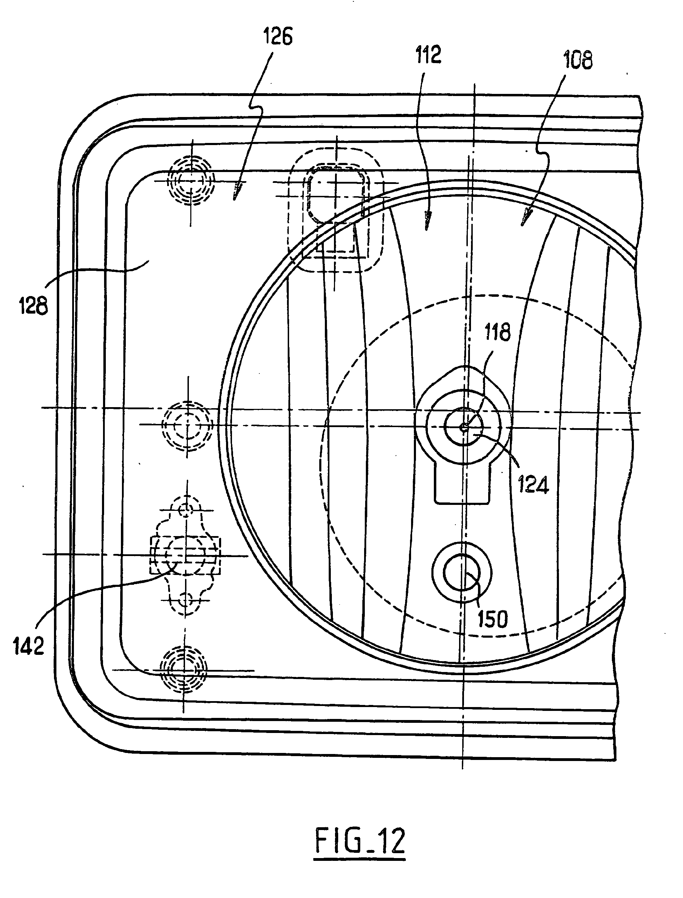

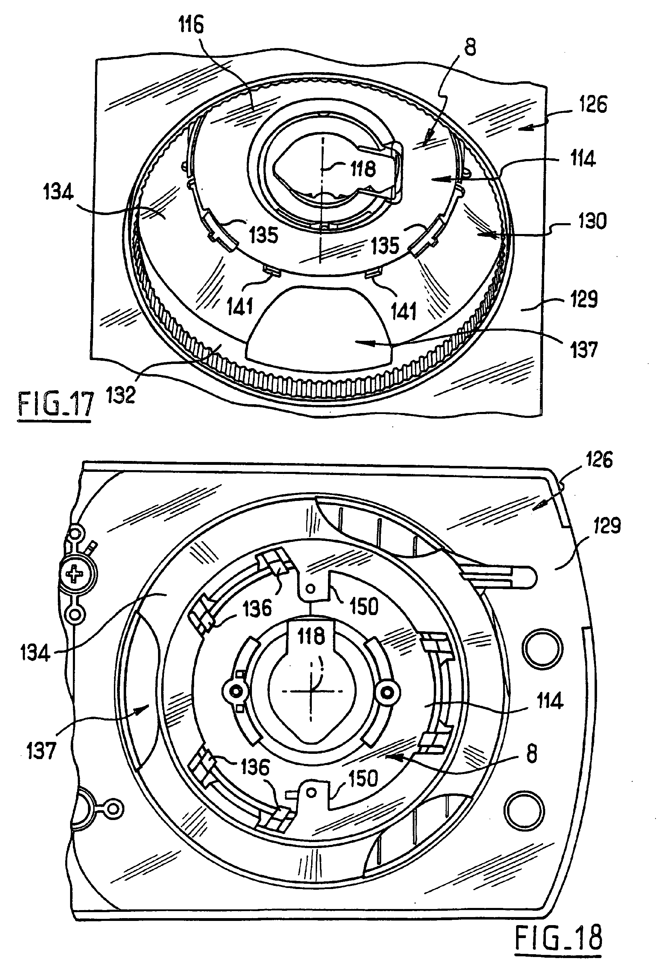

On va décrire en référence aux figures 8 à 18 un deuxième mode de réalisation de l'invention, également destiné à un camion, dans lequel les éléments homologues de ceux du premier mode portent des références augmentées de 100. Cette fois, le projecteur est un double projecteur et comporte deux sous-ensembles à lampe principale 124, porte-lampe 122, réflecteur 108 et masque 126. Chacun de ces sous-ensembles est globalement similaire à celui du premier mode de sorte que leur description ne sera pas reprise. La glace 106 et le boîtier 104 définissent une enceinte commune aux deux sous-ensembles. Les deux réflecteurs 108 sont indépendants l'un de l'autre. Toutefois les deux masques 126 sont d'une seule pièce l'un avec l'autre. Chacun des deux réflecteurs 108 est donc fixé au masque 126 par clipsage dans le logement correspondant, comme le montrent notamment les figures 9 et 10. Cette fois, les ergots 135 sont toujours au nombre de trois pour chaque réflecteur. Mais à chaque ergot 135 sont associées en propre deux butées 136 s'étendant de part et d'autre de l'ergot. Les butées sont donc au nombre de six pour chaque réflecteur. En outre, on a prévu pour chaque réflecteur des lamelles de positionnement radial 141, ici au nombre de six, et régulièrement réparties autour de l'axe 118 du logement de réflecteur. Chaque lamelle s'étend sensiblement parallèlement à l'axe 118 et vient solliciter la paroi 119 pour le centrage radial du réflecteur sur l'axe 118. Le sous-ensemble inférieur de la figure 8 comporte, en plus de la lampe principale 124, une lampe-ville 150 s'étendant de façon désaxée dans un orifice latéral de la paroi réfléchissante 112. La face réfléchissante du feu supérieur sur la figure 8 présente des stries.

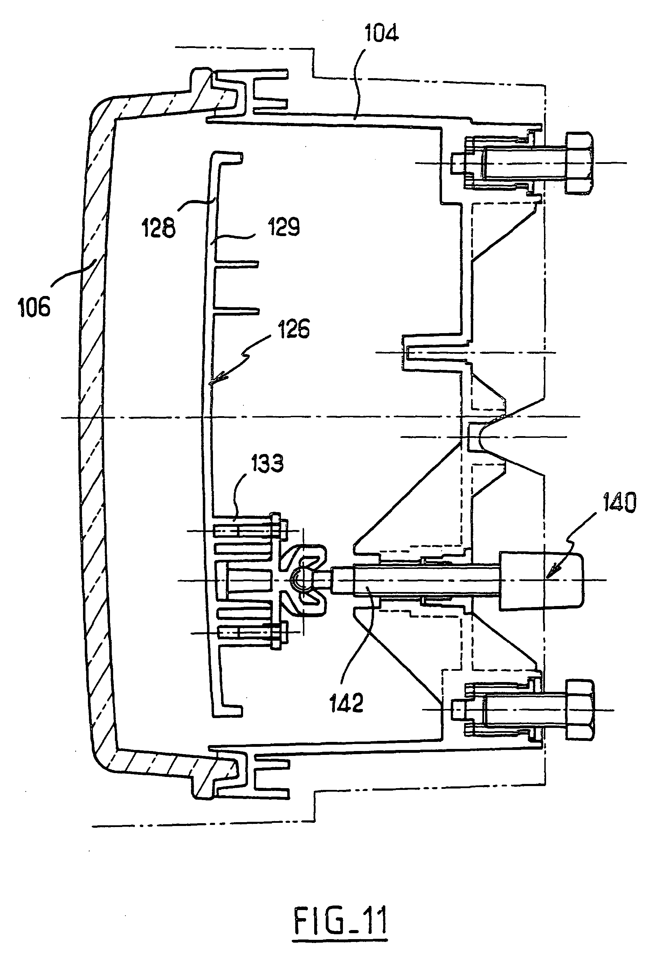

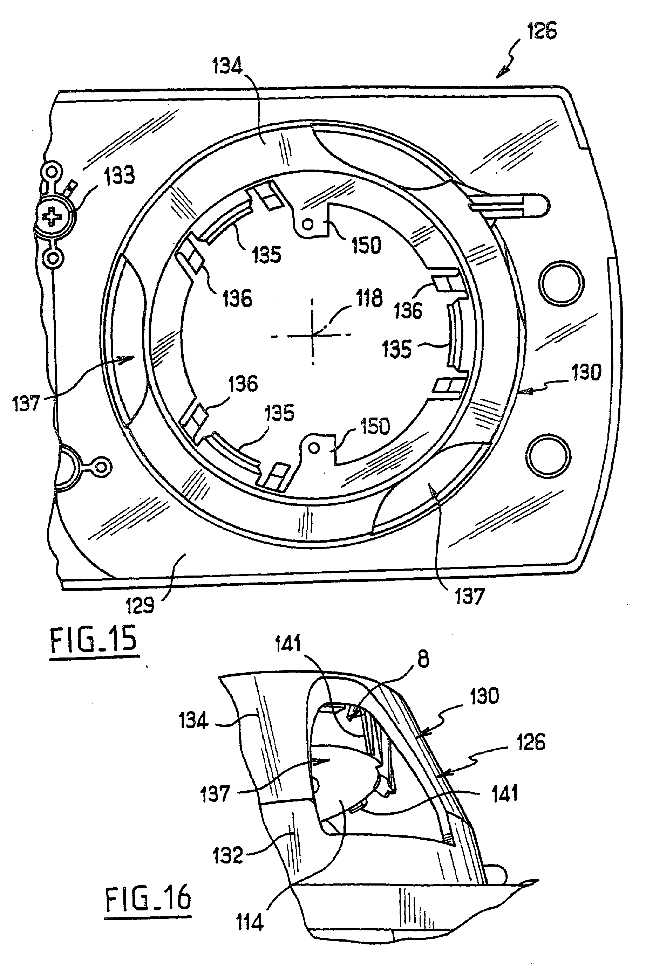

En référence à la figure 11, le correcteur de position 140 peut s'étendre à une extrémité du boîtier de sorte que l'un des sous-ensembles est interposé entre le correcteur 140 et l'autre sous-ensemble. Le correcteur s'étend latéralement en regard de la paroi réfléchissante, du côté opposé à la face réfléchissante 112. La tige 140 est en prise avec un relief arrière 133 d'une platine 129 s'étendant dans le plan des bordures 128 et prolongeant celles-ci d'une seule pièce avec les masques. Les deux sous-ensembles reliés à la pièce formant les deux masques 126 forment avec celle-ci un groupe d'un seul bloc. Ce groupe est manoeuvré par rapport au boîtier 104 pour sa bonne orientation grâce au correcteur 140. Ici encore, la pièce formant les masques 126 forme donc la platine de réglage. En référence à la figure 15, on pourra cependant prévoir en variante que le correcteur 140 est relié à la pièce formant les masques entre les deux réflecteurs 108.

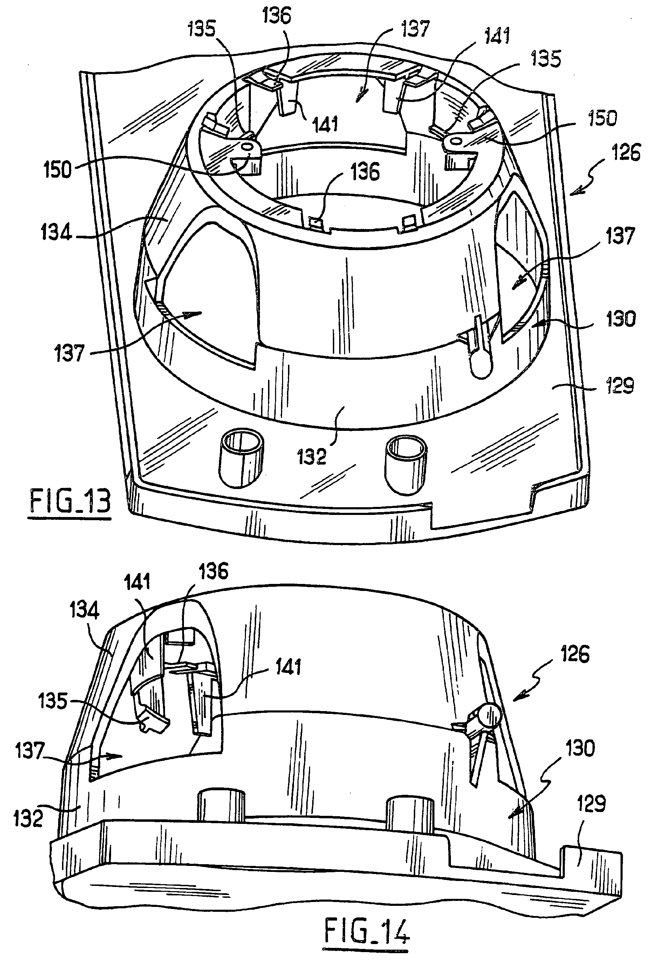

Chacun des réflecteurs 108 est clipsé dans son masque 126 de la même façon que pour le premier mode. La fixation par clipsage assure une bonne tenue relative des deux pièces en vibration. Toutefois, dans le cas où il est envisagé que le projecteur soit soumis à des vibrations de fréquence et/ou d'amplitude élevées, on prévoit de fixer en outre chaque réflecteur 108 au masque 126 par des vis. A cette fin, on pourra par exemple prévoir des oreilles 150, illustrées aux figures 13 et 15, s'étendant radialement en direction de l'axe 118 à partir du bord arrière de la paroi 119. Les oreilles reçoivent des vis vissées dans une paroi de l'embase 114 perpendiculaire à l'axe 118.

Dans ces deux modes de réalisation, les butées 36 et 136 sont configurées pour présenter une certaine élasticité axiale afin de rattraper le jeu axial du masque par rapport au réflecteur.

On remarque également que dans chacun de ces modes, le masque peut être fabriqué en matière plastique par moulage au moyen d'un moule de forme simple. En particulier, il n'est pas nécessaire que ce moule comporte des tiroirs.

Bien entendu, on pourra apporter à l'invention de nombreuses modifications sans sortir du cadre de celle-ci.

On pourra varier le nombre de clips et de butées.

On pourra prévoir tout ou partie des clips et/ou tout ou partie des butées sur le réflecteur.

On pourra également prévoir un projecteur dans lequel le masque est fixé directement au boîtier par clipsage.

Le correcteur 40, 140 pourra être manuel ou automatique. Il pourra agir sur la position en site et/ou en azimut.

## Revendications

1. Projecteur pour véhicule, comportant au moins un réflecteur (8 ; 108), un boîtier (4 ; 104) et un masque (26 ; 126) visible entre le réflecteur et le boîtier depuis l'extérieur du projecteur, le réflecteur et le masque comportant des moyens (19, 35 ; 119, 135) de clipsage direct l'un à l'autre , et **caractérisé en ce qu'**il comporte des moyens de réglage (40 ; 140) de la position du ou de chaque réflecteur (8 ; 108) par rapport au boîtier (4 ; 104) les moyens de réglage sont reliés directement au masque (26 ; 126) en vue du réglage.

2. Projecteur selon la revendication 1, **caractérisé en ce que** les moyens de clipsage étant aptes à former une butée à l'égard du déplacement du réflecteur (8 ; 108) par rapport au masque (26 ; 126) suivant une direction donnée (18 ; 118) dans un premier sens, le réflecteur et le masque comportent des moyens de butée (19, 36 ; 119, 136) interdisant le déplacement du réflecteur par rapport au masque dans cette direction (18 ; 118) et dans un deuxième sens.

3. Projecteur selon la revendication 2, **caractérisé en ce que** les moyens de clipsage (35 ; 135) et les moyens de butée (36 ; 136) sont alternés circonférentiellement autour d'un axe (18 ; 118) du projecteur.

4. Projecteur selon l'une quelconque des revendications 1 à 3, **caractérisé en ce que** les moyens de clipsage comprennent des ergots (35 ; 135) portés par le masque (26 ; 126).

5. Projecteur selon l'une quelconque des revendications 1 à 4, **caractérisé en ce que**, le réflecteur (8 ; 108) comportant une paroi réfléchissante (10 ; 110), les moyens de clipsage sont agencés de sorte que le réflecteur et le masque viennent en prise mutuelle à distance de cette paroi, à l'arrière de celle-ci.

6. Projecteur selon l'une quelconque des revendications 1 à 5, **caractérisé en ce que** le réflecteur (8 ; 108) comporte une embase (14 ; 114) s'étendant en partie arrière d'une paroi réfléchissante (10 ; 110) du réflecteur et au moyen de laquelle le réflecteur est fixé au masque.

7. Projecteur selon l'une quelconque des revendications 1 à 6, **caractérisé en ce que** le masque (26 ; 126) présente une partie évasée (30 ; 130) vers l'avant du projecteur et dans laquelle s'étend le réflecteur.

8. Projecteur selon l'une quelconque des revendications 1 à 7, **caractérisé en ce que** le masque (26 ; 126) et le réflecteur (8 ; 108) sont configurés pour assurer un centrage mutuel lors de l'approche de la position de clipsage.

9. Projecteur selon l'une quelconque des revendications 1 à 8, **caractérisé en ce qu'**il comporte des lamelles élastiques (141) de centrage relatif du réflecteur et du masque.

10. Projecteur selon l'une quelconque des revendications 1 à 9, **caractérisé en ce que** le réflecteur (108) étant un premier réflecteur et le masque (126) étant un premier masque, le projecteur comporte un deuxième réflecteur (108) et un deuxième masque (126) associé au deuxième réflecteur, les deux masques (126) étant d'une seule pièce.

11. Projecteur selon la revendication 10, **caractérisé en ce qu'**il comporte des moyens de clipsage direct du deuxième masque au deuxième réflecteur.

## Claims

1. Headlight for a vehicle, comprising at least one reflector (8; 108), a housing (4; 104) and a shield (26; 126) which is visible between the reflector and the housing from the exterior of the headlight, the reflector and the shield comprising means (19, 35; 119, 135) for direct clipping to one another, **characterised in that** it comprises means (40; 140) for regulation of the position of the or each reflector (8; 108) relative to the housing (4; 104), and the regulation means are connected directly to the shield (26; 126) for the purpose of the regulation.

2. Headlight according to claim 1, **characterised in that** since the clipping means can form a stop in relation to the displacement of the reflector (8; 108) relative to the shield (26; 126), according to a given direction (18; 118), in a first sense, the reflector and the shield comprise stop means (19, 36; 119, 136) which prevent the displacement of the reflector relative to the shield in this direction (18; 118), and in a second sense.

3. Headlight according to claim 2, **characterised in that** the clipping means (35; 135) and the stop means (36; 136) are alternated circumferentially around an axis (18; 118) of the headlight.

4. Headlight according to any one of claims 1 to 3, **characterised in that** the clipping means comprise lugs (35; 135) which are supported by the shield (26; 126).

5. Headlight according to any one of claims 1 to 4, **characterised in that**, with the reflector (8; 108) comprising a reflective wall (10; 110), the clipping means are arranged such that the reflector and the shield are mutually engaged spaced from this wall, to the rear of the latter.

6. Headlight according to any one of claims 1 to 5, **characterised in that** the reflector (8; 108) comprises a base (14; 114) which extends at the rear part of a reflective wall (10; 110) of the reflector, and by means of which the reflector is secured to the shield.

7. Headlight according to any one of claims 1 to 6, **characterised in that** the shield (26; 126) has a part (30; 130) which widens towards the front of the headlight, and in which the reflector extends.

8. Headlight according to any one of claims 1 to 7, **characterised in that** the shield (26; 126) and the reflector (8; 108) are configured to assure mutual centring during the approach to the clipping position.

9. Headlight according to any one of claims 1 to 8, **characterised in that** it comprises resilient plates (141) for relative centring of the reflector and the shield.

10. Headlight according to any one of claims 1 to 9, **characterised in that**, with the reflector (108) being a first reflector and the shield (126) being a first shield, the headlight comprises a second reflector (108) and a second shield (126) which is associated with the second reflector, the two shields (126) being integral.

11. Headlight according to claim 10, **characterised in that** it comprises means for direct clipping of the second shield to the second reflector.

## Patentansprüche

1. Fahrzeugscheinwerfer mit wenigstens einem Reflektor (8; 108), einem Gehäuse (4; 104) und einer zwischen dem Reflektor und dem Gehäuse von außerhalb des Scheinwerfers sichtbaren Blende (26; 126), wobei der Reflektor und die Blende Mittel (19, 35; 119, 135) zum unmittelbaren Aneinanderklipsen umfassen, und
**dadurch gekennzeichnet, dass** er Mittel (40; 140) zum Verstellen der Position des oder jedes Reflektors (8; 108) bezüglich des Gehäuses (4; 104) umfasst, wobei die Stellmittel zum Verstellen direkt mit der Blende (26; 126) verbunden sind.

2. Scheinwerfer nach Anspruch 1,
**dadurch gekennzeichnet, dass** der Reflektor und die Blende, da die Clipmittel gegenüber der Verlagerung des Reflektors (8; 108) bezüglich der Blende (26; 126) längs einer gegebenen Richtung (18; 118) in einer ersten Richtung einen Anschlag zu bilden vermögen, Anschlagmittel (19, 36; 119, 136) umfassen, welche die Verlagerung des Reflektors bezüglich der Blende in dieser Richtung (18; 118) und in einer zweiten Richtung verhindern.

3. Scheinwerfer nach Anspruch 2,
**dadurch gekennzeichnet, dass** die Clipmittel (35; 135) und die Anschlagmittel (36; 136) um eine Achse (18; 118) des Scheinwerfers herum umfangsseitig abwechselnd angeordnet sind.

4. Scheinwerfer nach einem der Ansprüche 1 bis 3,
**dadurch gekennzeichnet, dass** die Clipmittel an der Blende (26; 126) befindliche Nasen (35; 135) aufweisen.

5. Scheinwerfer nach einem der Ansprüche 1 bis 4,
**dadurch gekennzeichnet, dass** die Clipmittel, da der Reflektor (8; 108) eine reflektierende Wand (10; 110) aufweist, so angeordnet sind, dass der Reflektor und die Blende mit Abstand zu dieser Wand hinter ihr gegenseitig in Eingriff sind.

6. Scheinwerfer nach einem der Ansprüche 1 bis 5,
**dadurch gekennzeichnet, dass** der Reflektor (8; 108) einen Sockel (14; 114) aufweist, der sich im hinteren Teil einer reflektierenden Wand (10; 110) des Reflektors erstreckt, und mittels dem der Reflektor an der Blende befestigt ist.

7. Scheinwerfer nach einem der Ansprüche 1 bis 6,
**dadurch gekennzeichnet, dass** die Blende (26; 126) einen sich zur Vorderseite des Scheinwerfers weitenden Bereich (30; 130) aufweist, in dem sich der Reflektor erstreckt.

8. Scheinwerfer nach einem der Ansprüche 1 bis 7,
**dadurch gekennzeichnet, dass** die Blende (26; 126) und der Reflektor (8; 108) so ausgebildet sind, dass bei Annäherung an die Anklipsposition eine gegenseitige Zentrierung erfolgt.

9. Scheinwerfer nach einem der Ansprüche 1 bis 8,
**dadurch gekennzeichnet, dass** er elastische Zungen (141) zum relativen Zentrieren des Reflektors und der Blende umfasst.

10. Scheinwerfer nach einem der Ansprüche 1 bis 9,
**dadurch gekennzeichnet, dass** der Scheinwerfer, da der Reflektor (108) ein erster Reflektor ist und die Blende (126) eine erste Blende ist, einen zweiten Reflektor (108) und eine dem zweiten Reflektor zugeordnete zweite Blende (126) umfasst, wobei beide Blenden (126) in einem Stück ausgeführt sind.

11. Scheinwerfer nach Anspruch 10,
**dadurch gekennzeichnet, dass** er Mittel zum unmittelbaren Anklipsen der zweiten Blende am zweiten Reflektor umfasst.
